# EUROPEAN PATENT APPLICATION

(11) **EP 4 631 893 A1**
(43) Date of publication of application: **15.10.2025**
(21) Application number: 24168989.2
(22) Date of filing: 08.04.2024
(51) Int. Cl.: B65G 17/18, B65G 17/48

(54) **CONVEYOR SYSTEM WITH CARRIERS MAINTAINED IN HORIZONTAL POSITION ALONG A TRANSPORT TRACK**

(71) Applicant: Franke Technology and Trademark Ltd, 6052 Hergiswil (CH)
(72) Inventor: Czapp, Ireneusz, CH-6052 Hergiswil (PL); Pawlusik, Konrad, Dzierzazno 83-332 (PL); Lebkowski, Wojciech, 84-230 Rumia (PL); Majorek, Aleksander, 84-206 Gniewowo (PL); Majorek, Aleksander, 83-010 Rotmanka (PL); Prusinowski, Mateusz, 10-692 Olsztyn (PL)
(74) Representative: LBP Lemcke, Brommer & Partner Patentanwälte mbB

(57) **Abstract**

We disclose a conveyor system for the transport of packaged food products, comprising:
a curved, preferably closed-loop pathway defined by a profiled track;
a plurality of wheel cars (20) having wheels (26, 28) that are movably contained within and guided by said profiled track; and
at least one removable connector (60), preferably a plurality of removable connectors (60), wherein at least one pair of wheel cars (20) are separated along said pathway by means of said removable connector (60) that is positioned between the two wheel cars (20) in said pair of wheel cars (20);
said wheel cars (20) and said connectors (60), respectively, form part of a continuous transport chain extending along said pathway;
said transport chain having an attachment side facing towards an open side of said profiled track, and said track being arranged such that said open side faces into a substantially horizontal direction such that said attachment side is oriented substantially vertically during motion of said wheel cars (20) along the pathway;
said conveyor system further comprising at least one carrier with a carrier rack adapted to support a food product to be transported, said carrier being pivotably mounted to the attachment side of said transport chain, to maintain the carrier rack in a horizontal position as the carrier travels along the pathway.

The connectors help to reduce substantially the number of wheel cars and corresponding wheels, thus also reducing noise and wear during operation.

## Description

### Specification

The invention relates to a conveyor system for the transport of packaged food products, in particular for fast food restaurants, cafeterias, etc.

In the prior art, said conveyor system typically comprises a curved, preferably closed-loop pathway defined by a profiled track and a plurality of wheel cars having wheels that are movably contained within and guided by said profiled track. Said wheel cars have an attachment side facing towards an open side of said profiled track. Furthermore, said track is arranged such that said open side faces into a substantially horizontal direction such that said attachment side of said wheel cars is oriented substantially vertically during motion of said wheel cars along the pathway. The conveyor system further comprises at least one carrier with a carrier rack adapted to support a food product to be transported. Said carrier is pivotably mounted to the attachment side of one of the wheel cars to maintain the carrier rack in a horizontal position as the carrier travels along the pathway.

Such a system is known from EP 3 533 733 B1 in the name of the present applicant. The whole contents of said publication is herewith incorporated by reference into the present application, as if fully set forth.

According to the disclosure in EP 3 533 733 B1, the wheel cars are directly interconnected via hinged connection means that form part of the wheel cars in order to form a closed chain of wheel cars along the pathway. This chain of wheel cars constitutes a transport chain that can be moved along the pathway by means of a single (central) drive unit. The carrier is mounted to the wheel cars, as mentioned before.

This can have the disadvantage that a relatively large number of wheel cars are required to close the chain. The correspondingly large number of wheels that roll on the track may result in a relatively high level of noise during operation, which may also be accompanied by correspondingly high wear and tear.

It is the object of the present invention to develop a system of the above-defined type that can operate at a reduced noise level while also reducing wear, in particular of the wheels of the wheel cars, thus also reducing operational and maintenance costs.

This object is achieved by means of a conveyor system as defined in appended claim 1. Advantageous further developments are defined in the dependent claims.

A conveyor system in accordance with the present invention, which can be used for the transport of packaged food products, comprises: a curved, preferably closed-loop pathway defined by a profiled track; a plurality of wheel cars having wheels that are movably contained within and guided by said profiled track; and at least one removable connector, preferably a plurality of removable connectors, wherein at least one pair of wheel cars, i.e., two neighbouring wheel cars in said chain of wheel cars, are separated along said pathway by means of said removable connector that is positioned between the two wheel cars in said pair of wheel cars. Said wheel cars and said connectors, respectively, form part of a continuous transport chain extending along said pathway. Said transport chain has an attachment side facing towards an open side of said profiled track, and said track is arranged such that said open side faces into a substantially horizontal direction such that said attachment side of said wheel cars and said connectors, respectively, is oriented substantially vertically during motion of said wheel cars along the pathway. The conveyor system further comprises at least one carrier with a carrier rack adapted to support a food product to be transported. Said carrier is pivotably mounted to the attachment side of said transport chain to maintain the carrier rack in a horizontal position as the carrier travels along the pathway.

By introducing said connectors as separate, removable elements at least between some of the wheel cars, preferably between each pair of wheel cars, i.e., any two neighbouring wheel cars, the number of wheel cars required to close the transport chain can be reduced, thus reducing the number of wheels and, as a direct consequence, noise level as well as wear. Gaps between individual wheel cars are effectively bridged by means of the connectors, which have no wheels, such that the resulting (transport) chain of wheel cars and connectors can still be moved by means of one (central) drive unit, e.g., a gear wheel.

According to the invention, the carriers need not be mounted directly to the attachment side of at least one of the wheel cars (as in the prior art) or of at least one of the connectors. In a preferred embodiment, an additional intermediate support structure that forms part of the transport chain can be used for attaching the carrier thereto, which intermediate support structure is then connected to at least one of the wheel cars or to at least one of the connectors. In other words: The conveyor system may further comprise, in said transport chain, i.e. as a link in said transport chain, at least one intermediate support structure that is connected to at least one of the wheel cars by a connector. In a highly preferred embodiment, said additional intermediate support structure is arranged between either two connectors or between two wheel cars or between a wheel car and a connector along the chain. Advantageously, the connection of the additional intermediate support structure to any neighbouring element (either wheel car or connector) is a hinged connection.

Most preferably, the additional intermediate support structure comprises at least one (support) wheel for supporting said additional intermediate support structure, i.e., a load thereof, in rolling fashion on the track.

The intermediate support structure can also have an attachment side that constitutes part of the attachment side of the transport chain, and said carrier can thus be mounted on the intermediate support structure on said attachment side thereof.

Additionally or alternatively, said wheel cars and said connectors, respectively, may have an attachment side that constitutes part of the attachment side of the transport chain; and said carrier can then be mounted on a wheel car or on a connector on said respective attachment side thereof.

The following further embodiments of the conveyor system in accordance with the present invention have proved particularly useful:
In a further embodiment of the conveyor system in accordance with the present invention the connectors are devised as rod-shaped, elongated elements, each of which has a respective first connection joint, preferably a female connection joint, at both extremities for detachable hinged connection to a respective wheel car or to the intermediate support structure, if such a structure is present. The connectors preferably do not have any wheels (in contrast to the wheel cars and said intermediate support structure).

Due to their elongated form, the connectors are very efficient at bridging gaps between individual wheel cars, thus reducing a number of the latter, which is highly advantageous in terms of noise production and wear.

In yet a further embodiment of the conveyor system in accordance with the present invention the wheel cars and/or the intermediate support structure have a respective second connection joint, preferably a (complementary) male connection joint, at opposite ends for detachable hinged connection to a respective connector.

In this way, a hinged connection between connectors on the one hand and wheel cars or the intermediate support structure on the other hand can be easily established.

In still a further embodiment of the conveyor system in accordance with the present invention said hinged connection between a given wheel car and a given connector or between said intermediate support structure and a given connector comprises an engagement of a first connection joint and a second connection joint.

In this way, a stable and durable connection between said elements of the conveyor system can be achieved.

In another embodiment of the conveyor system in accordance with the present invention at least one connector cap is detachably fixed to one of said given connector, said given wheel car and said intermediate support structure. Preferably, there are two connector caps per connector, i.e., one cap for each extremity. Said connector cap is intended to cover and secure said hinged connection(s).

In this way, the hinged connection(s) can be efficiently secured by preventing a disengagement of said first and second connection joints. Furthermore, the hinged connection is protected against dirt or the like.

In still a further embodiment of the conveyor system in accordance with the present invention said first connection joint is made from polyamide, PA, preferably PA6 containing 30% of glass fibre, or similar material and the second connection joint is made from polyoxymethylene, POM, or similar material.

If the second connection joint (or male connection joint) is made from POM material and the first connection joint (or female connection joint) is made of PA, i.e., a particular type of polyamide, this enables durable and smooth operation.

In a highly preferred embodiment of the conveyor system in accordance with the present invention the connectors are longer than the wheel cars in a direction along the pathway.

This makes it possible to greatly reduce the number of wheel cars that are required to obtain a closed loop or transport chain on the track pathway.

In another preferred embodiment of the conveyor system in accordance with the present invention the wheel cars and the connectors comprise gear teeth on an underside thereof for engaging a drive mechanism, e.g., a motor means with (direct) drive sprocket. Said underside faces away from said open side. Preferably, a number of teeth is bigger for said connectors than for said wheel cars, for example and without limitation 14 teeth for said connectors and only 3 teeth for said wheel cars.

In this way, the connectors take on an active part in driving the aforementioned transport chain along/around the track, which part had exclusively been played by the wheel cars in the prior art.

In another preferred embodiment of the conveyor system in accordance with the present invention a base plate having a front side and a back side is installed between the carrier and the intermediate support structure or between the corresponding wheel car or connector. Said base plate can extend laterally beyond said track. It carries at its front side a hanging pivot from which said carrier is suspended.

According to a highly advantageous embodiment, said base plate can be (removably, e.g., by means of screws) attached to a wheel car or connector or to the above-mentioned intermediate support structure.

In another highly preferred embodiment of the conveyor system in accordance with the present invention said base plate carries at its front side at least one lateral bumper against which said carrier rests when travelling along said horizontal section of said track. This can efficiently suppress swinging movements of said carrier.

In yet another highly preferred embodiment of the conveyor system in accordance with the present invention said base plate comprises a support structure that has at least one additional support wheel for rolling on the track.

This support structure can be helpful in support a weight or load that is transported by means of the carrier.

In yet another highly preferred embodiment of the conveyor system in accordance with the present invention said bumper is removably attached together with at least said connector cap, preferably by means of one common fixing element, for example a screw.

Such an embodiment does effectively reduce the number of elements used in the conveyor system and thus facilitates set-up and maintenance.

In still another highly preferred embodiment of the conveyor system in accordance with the present invention on the wheel cars and/or the intermediate support structure comprise(s) wheels having tires that are directly moulded onto respective bushings. Preferably, these tires made from thermoplastic polyurethane, TPU, or similar material.

Alternatively, tires can be glued, or they can be mounted geometrically using two bearings.

Such a design makes it virtually impossible to lose a tire due to peel-off during operation of the system.

In another advantageous embodiment of the conveyor system in accordance with the present invention said wheel cars are made from polyoxymethylene, POM, or similar material, and said connectors are made from a fibre-reinforced plastics material, preferably fibreglass, preferably from fibre-reinforced polyamide, in particular PA6 30GF (polyamide 6 with 30% glass fibres), or similar material. Other matrix materials and different amounts of fibre and/or glass beads can be used as well.

This correlation of materials lowers down the wear between those two elements. Furthermore, the connector can thus be made much stronger in relation to the "dog bone" connecting element known from the prior art, in this way providing enhanced stiffness of the system and enabling firm drive of the system by pushing and pulling.

Another advantageous embodiment of the conveyor system in accordance with the present invention comprises a cover plate that is detachably fixed on at least one connector, preferably on each connector. Said cover plate can essentially cover a whole length of the connector, possibly with an exception of said first connection joints (for easy access). It can extend laterally beyond a width of the connector.

To close up the open space between the wheel cars, which space is created by the (long) connectors, the aforementioned special cover plates were designed. Said cover plates reduce noise and increase the overall safety of the system.

Finally, in another advantageous embodiment of the conveyor system in accordance with the present invention said cover plate is fixed to the connector by means of said connector cap, e.g., by clamping. Alternatively, said cover plate is fixed to the connector together with said connector cap and said bumper, preferably by means of one single screw, in order to reduce complexity of the system.

Additional features and further advantages in connection with the present invention will become apparent from the following description of preferred embodiments with reference to the drawings.

In the drawings, the same reference numerals will be used to denote like elements or elements having at least similar functions.
Figure 1 shows an exemplary setup of a conveyor system;
Figure 2 shows a cross-section of a track profile as used in the conveyor system of Figure 1;
Figure 3 shows different views of a bumper cross and carrier basket for use in the conveyor system of Figure 1;
Figure 4 shows different views of a wheel car and connector assembly in accordance with embodiments of the present invention;
Figure 5 shows different views of a modified wheel car and connector assembly in accordance with embodiments of the present invention; and
Figure 6 shows different views of a wheel car and connector assembly with attached bumper cross and carrier basket and a support structure in accordance with embodiments of the present invention.

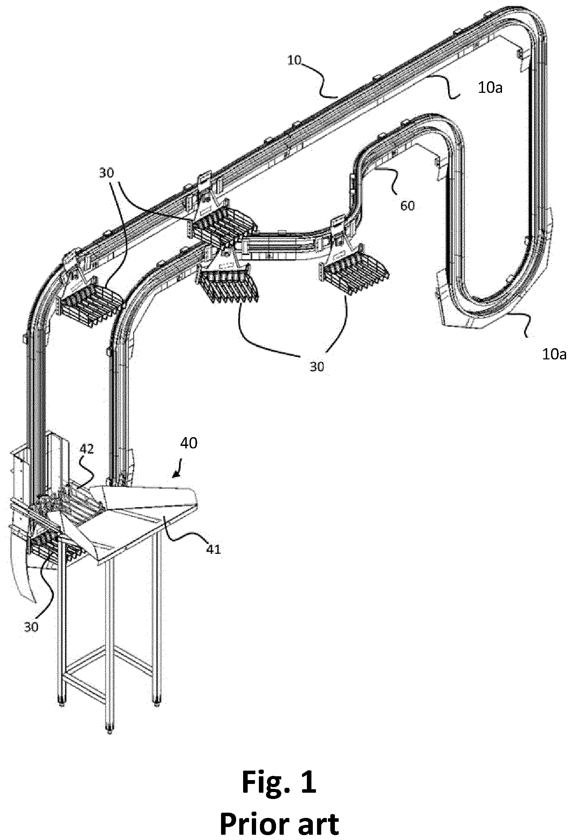

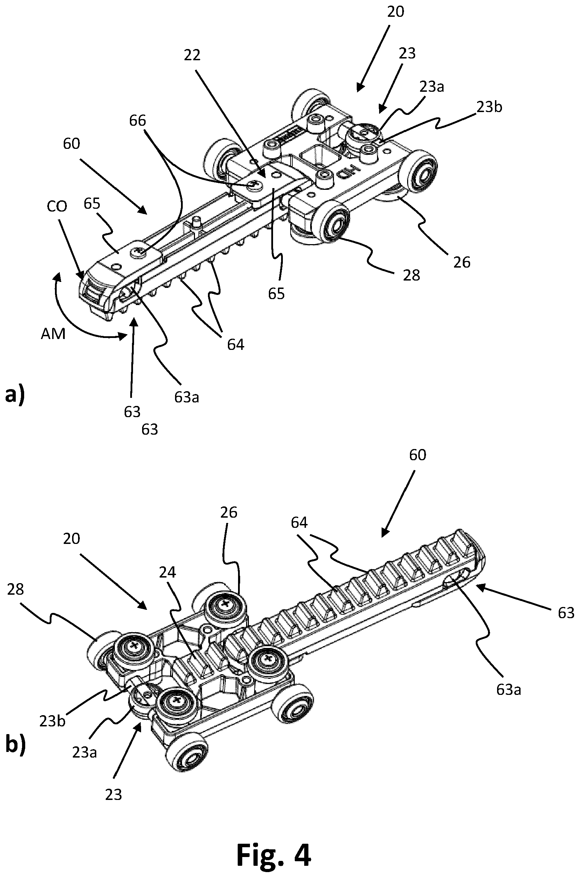

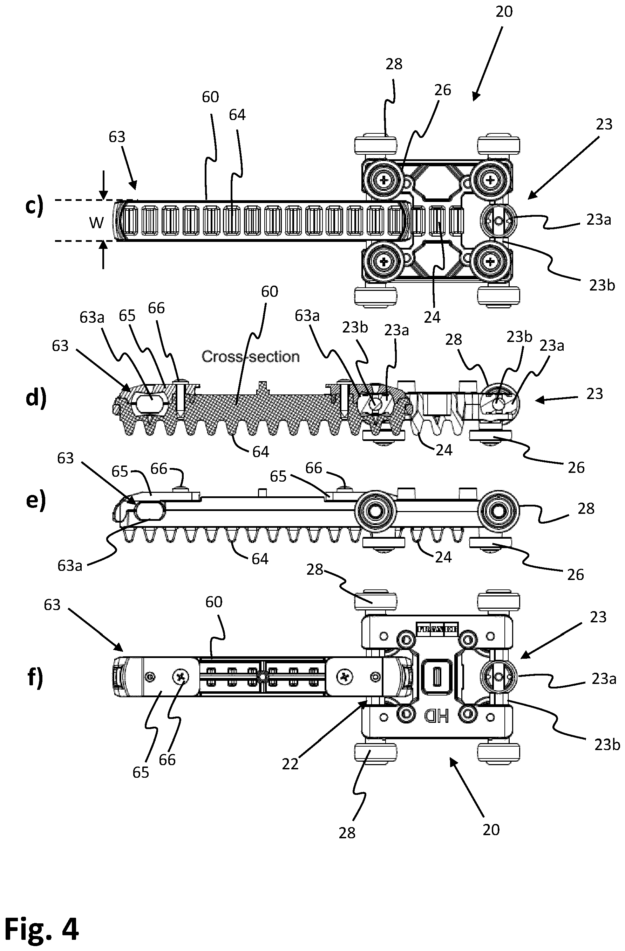

Figure 1 shows an exemplary setup of a conveyor system ("system") as known from the prior art for the transport of packaged food products. However, the basic set-up of the system, especially with respect to the track design, is essentially the same in the context of the present invention, whereas the main differences reside in the design of the wheel cars and the wheel car connectors, as will be shown and described in connection with Figures 4 ff.

The system of Figure 1 advantageously uses a profiled track 10 made from lightweight aluminium track sections connected together to form a closed loop. Although this is the preferred configuration, the invention is in principle not limited to a closed loop configuration. The track 10 can be made to snake through a building from a loading point to an unloading point and back again. The track 10 can run horizontally in a straight line and around corners; it can also run in a straight line in a vertical direction and, optionally, in a straight line on a (up to) 45-degree incline, too.

It should be understood that the setup in Figure 1 is just a simplified example to show the function of the system. The actual design of the route that the track 10 takes is determined by the location and orientation of the loading and unloading points, the position and size of the kitchen equipment (not shown), and layout of the building itself in which the track 10 is installed. Typically, the track 10 will run from a loading point located in a food preparation area to an unloading point that is typically located by a drive-through window or in a kiosk. It has small radius for horizontal and vertical bends to allow the track route to move through tight spaces. The actual track layout is made up of standard horizontal and vertical corners and straight sections of track that can be cut to length. The significant advantage of the track-based conveyor system described herein is that unlike a normal conveyor belt it is not limited to a straight line between any two points and it does not take up any valuable floor space.

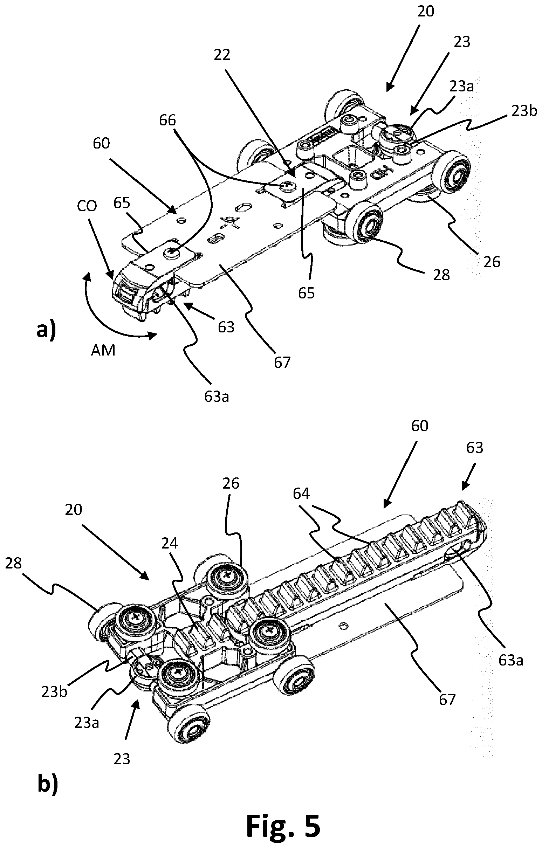

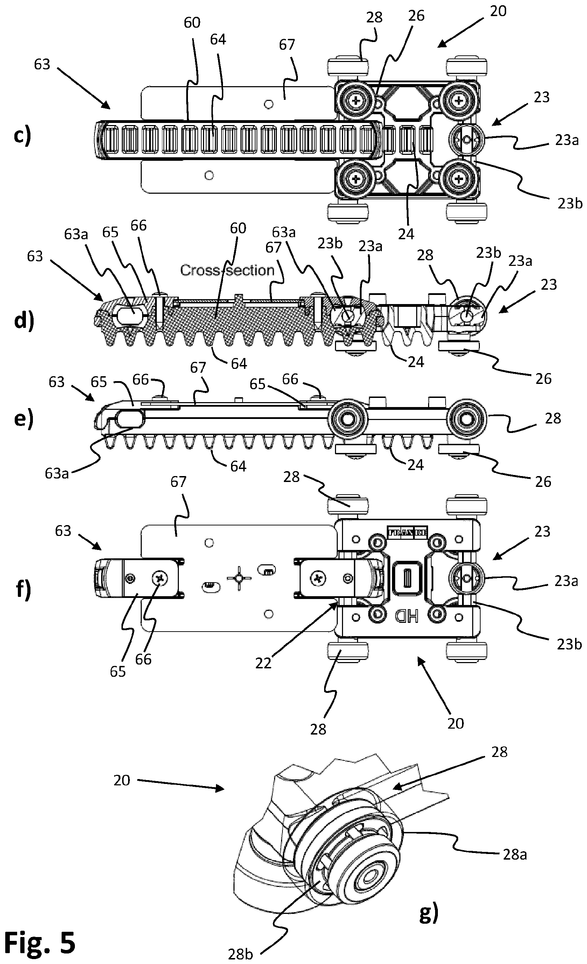

The profiled track 10 is formed as a kind of longitudinal cage or cage rail for a number of small wheel cars 20 as the ones shown in Figures 4 and 5, which are contained inside and guided by the profiled track 10 and which will be described in more detail below.

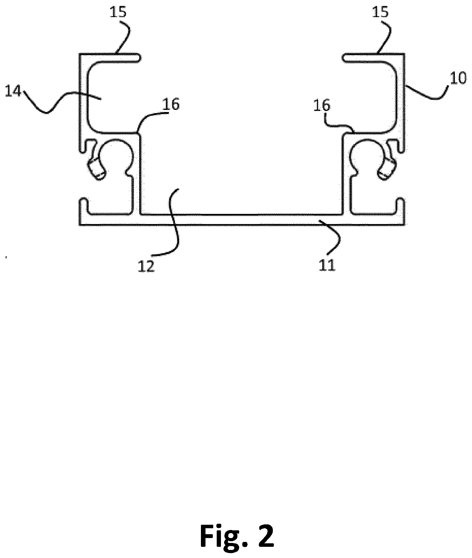

The profile of the track 10 can be viewed in more detail in a cross section shown in Figure 2. The track 10 has a closed backside wall 11, which serves for attachment of the track to a wall or other building structure. Adjacent to the backside wall 11, the track as a narrower portion 12 confined by side walls, which extends towards an open front side 16 into a wider portion 14. The wider portion 14 is confined towards the open front side by inwardly facing shoulders 15.

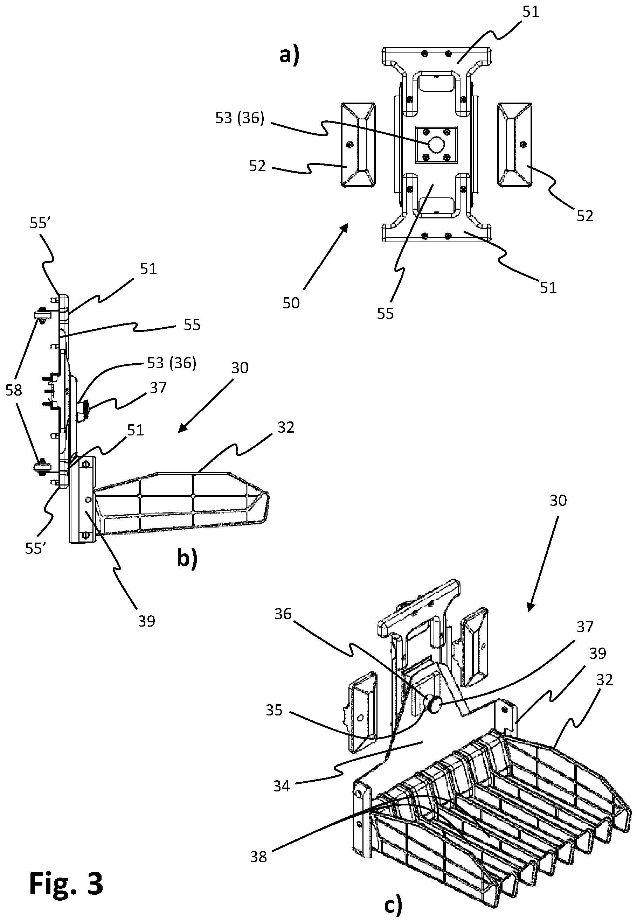

Figure 3 comprises several sub-figures a) to c) that illustrate a carrier 30 (cf. Figure 1) which can be used for transporting food products in the context of the present invention. To this end, a front side of the wheel cars, of the wheel car connectors or of an intermediated support structure - as will be explained later with respect to Figures 4-6 - may serve for the attachment of carrier 30. Carrier 30 comprises a carrier rack or basket 32 on which food products to be transported can be placed. Said front side is therefore also referred to as "attachment side". The carrier 30 used in a preferred embodiment has a back panel 34 of substantially triangular shape. At the back of the back panel 34 is an eyelet 35 that serves to hang the carrier 30 to a pivot pin 36 (53) attached to one of the wheel cars, the wheel car connectors or (preferably) an intermediated support structure, as will be explained later, so that the carrier can pivot or swing around the pivot pin 36 (53) and thus maintains a horizontal position when travelling along the track, irrespective of the direction of the track. An indexing plunger 37 at the front side serves to lock the eyelet 35 to the pivot pin 36 (53) so that it cannot fall off.

The carrier rack or basket 32 comprises a number of fingers 38, which extend substantially vertically from the back panel 34 and bend slightly upwards towards their free end. The carrier basket is connected to the back panel 34 with a hinge connection 39 so that the carrier rack 32 can pivot upwardly about a horizontal axis. This will allow the carrier rack to pivot upwardly intro a substantially vertical position when its downward path is obstructed.

On the left side of the conveyor system in Figure 1 is a food loading point 40, which has a funnel-shaped slide 41, which ends on a similar comb structure 42 with fingers extending opposite the fingers 38 of the carrier racks 32. A ready and wrapped food item can be placed on the slide 41 and will slip down onto the comb structure 42. A carrier 30, which comes from below, will pick up the item in that the fingers 38 of the carrier rack 32 comb through the corresponding fingers of the comb structure 42.

For the attachment of the carriers 30 to a corresponding wheel car, wheel car connector or intermediate support structure serves a base plate 55 and bumper cross 50 which can be viewed in more detail in sub-figure a) of Figure 3. The bumper cross 50 has four bumpers 51, 52 arranged around the pivot pin 53 (36) in all four directions, vertically and horizontally. Please note that standard vertical transporter systems may not require and will thus not include neither the (cross) bumpers 51 nor the base plate 55. The carrier 30, which suspends pivotably from the pivot pin 53 (36), rests against the lowest of the bumpers 51, 52. As the corresponding wheel car (or wheel car connector) travels along the curved track 10 (cf. Fig-ure 1), it will turn by 90 (or 180) degrees when the track makes a corresponding turn and thus the bumpers 51, 52 will switch their roles so that another one of the bumpers 51, 52 will become the lowest bumper.

The bumpers 51, 52 are preferably made from an engineering thermoplastics material and support and stabilize the carrier rack 32 hanging from the pivot pin 53 (36). Friction between the bumpers 51, 52 and the carrier rack 32 will dampen a swinging movement the carrier 30 might fulfil due to acceleration, as the conveyor system starts or stops, or radial acceleration as the carrier 30 moves through a curve.

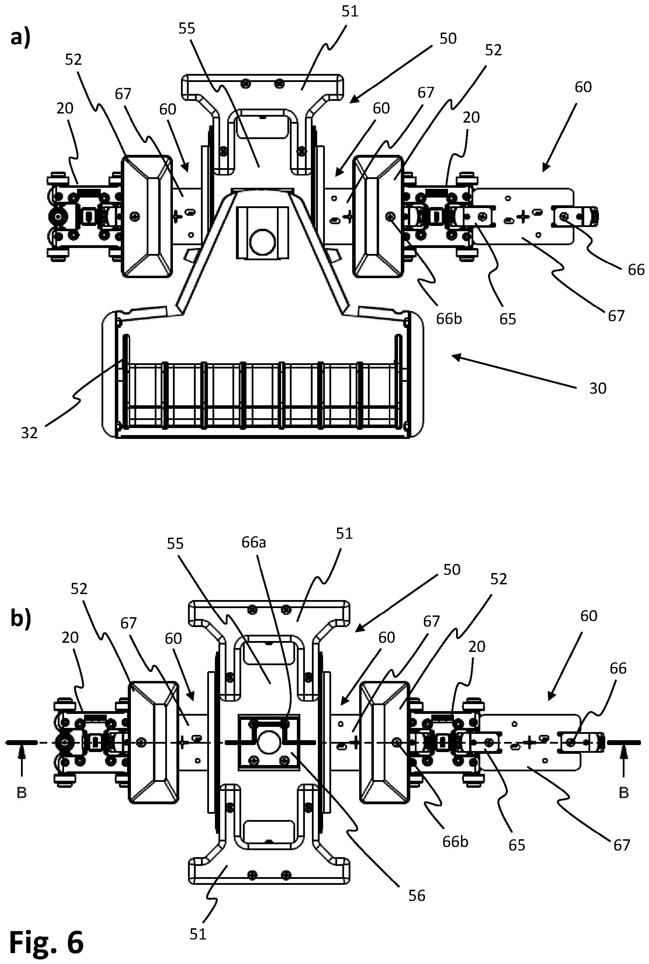

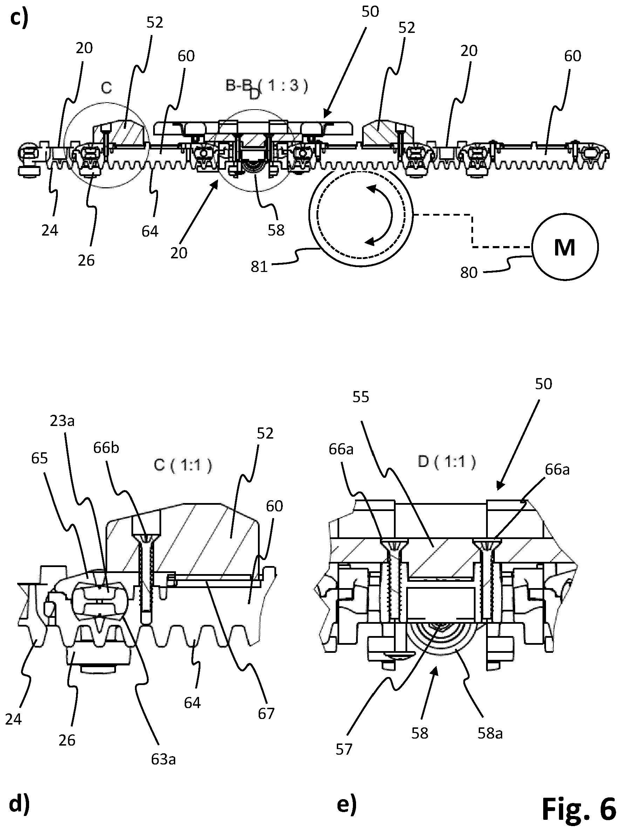

The bumpers 51 (cross bumpers) are attached to a base plate 55 that is preferably fixed to a wheel car (not shown) and extends laterally on both sides of the track 10 (cf. Figure 1). Bumpers 52 (side bumpers) are attached directly to wheel car connectors, as will become apparent later (cf. Figure 6). At the two lateral extensions 55' (cf. sub-figure b) of Figure 3) of the base plate 55, which extend beyond the track 10 (cf. Figure 1) and serve as an additional support structure, there are small rollers or support wheels 58 installed at the back side. The purpose of these additional rollers or support wheels 58 is to support the carrier 30 along horizontal sections of the track or in curves. In order to do so, the conveyor system has flat support rails 10a (cf. Figure 1) installed below the track 10 along (at least) its horizontal sections. The lower of these rollers 58 will be in contact with the flat support rail 10a underneath and, as the carrier moves, will roll along the support rail 10a. The lower of the rollers

58 via the base plate 55 and the lower of the bumpers 51 will thus absorb any lever forces which the horizontal lever arm of the carrier 30, i.e. the fingers 38 of the carrier rack 32 with the load carried thereon, exerts onto the track 10 and the wheel car or wheel car connector.

Figure 4 and its sub-figures a) to f) shows a so-called "HD" wheel car 20 with attached wheel car connector (also simply referred to as "connector" in the present disclosure) 60. Sub-figures a) and b) of Figure 4 are perspective views, whereas sub-figures c) to f) of Figure 4 show different alternative views, i.e., bottom, cross-section, side and top. Two wheel cars 20 as shown can be connected together by a connector 60 via hinged joints or hinged connections 22 to form a continuous train (or transport chain) of wheel cars. The train of wheel cars 20 in the track system is pulled around by an electric drive system that uses a motor with a preferably direct drive sprocket that engages through a backside opening in the track with teeth 24 incorporated into the bottom of the wheel cars 20 and the connectors 60 (the teeth of which are denoted by reference numeral 64). This will be explained further below in connection with Figure 6.

Accordingly, the wheel cars 20 have at their backside a row of teeth 24 to which the drive sprocket may engage. Four small wheels 26 in the four corners at the backside of wheel car 20, which have their axis perpendicular to the backside wall 11 of track 10 (cf. Figure 2), roll along the side walls of the track 10 in the narrower section 12 and support the wheel car 10 in lateral direction. Four lateral wheels 28, two at both sides of the wheel car 20, are positioned in the wider section 14 of the track 10 to roll along the shoulders 15 and the step 16 formed at the junction between the narrower and the wider sections 12, 14. They support the wheel car 20 in the direction perpendicular to the backside wall 11.

Wheel cars 20 and wheels 24, 26 can be made from a high-performance plastic with built in lubricating properties, such as PTFE for instance, which means the system requires no further lubrication during operation or for maintenance. Alternatively, wheel cars 20 can be made polyoxymethylene, POM, or similar material. In case of so-called "basic cars", the wheels can be made of a PA630 bush with TPU tire.

The main differences between HD wheel cars (as shown in the drawings) and basic wheel cars are as follows:
They use different wheels - in the basic version there is a TPU tire on a plastic bushing, whereas in HD there is a TPU tire on a metal bearing.

They have different axles - in the basic version the axle is a part of the car body, whereas in HD the axle is made from a metal shaft to provide the car with a bigger load resistance.

They have different mountings of their respective ball joint - in the basic version said ball join is just a part of the car body. In the HD version it is a separate part which can rotate on metal shaft, thus lowering down the friction between ball joint and connector in that direction, as will be described in detail below.

In the basic version, all the wheels of the car are identical. In the HD cars, the backside wheels (cf. reference number 26, as introduced above) differ from the side wheels (reference number 28, cf. above) - they have different bearings and the wheels 26 are thinner).

The connectors 60 are devised as rod-shaped, elongated elements, each of which has a respective first or female connection joint 63 at both extremities for detachable hinged connection to a respective wheel car 20, as will be explained shortly. The connectors 60 can be made from fibre-reinforced polyamide, in particular PA6 30GF, or similar material.

In particular, the use of fibreglass for producing said connectors may be highly advantageous in the context of the present invention since this ensures their dimensional stability in changing environmental conditions. Fibreglass is a common type of fibre-reinforced plastic using glass fibre. The fibres may be randomly arranged, flattened into a sheet called a chopped strand mat, or woven into glass cloth. The plastic matrix may be a thermoset polymer matrix-most often based on thermosetting polymers such as epoxy, polyester resin, or vinyl ester resin-or a thermoplastic. The invention is not restricted to using a particular type of fibreglass.

In said "basic" version of the wheel cars 20 that is not shown in the present specification, a bushing of the wheels 26, 28 is preferably made of PA630 or PA6 GF30 (i.e., polyamide 6 with 30% glass fibres), as stated before. This lowers down the axle wear in operation. In such an embodiment, the tire could then be made of TPU.

In the "HD" (heavy duty) wheel cars 20 shown in Figures 4 and 5, which can withstand work under higher loads, wheels 26, 28 are rotating on ball bearings. Shafts on which the bearings are rotating are preferably made from steel. This construction enables the ball joint to rotate freely, thus lowering down its wear in the direction of rotation. Basic wheel cars could have the above-mentioned bushings instead.

To form said hinged connections 22 mentioned earlier, the wheels cars 20 comprise a second or male connection joint 23, which can best be seen from sub-figures a), b), c) and f) of Figures 4 and 5. Said second joint 23 comprises a ring-shaped element 23a that can perform a swivelling motion on axle 23b, which axle 23b is perpendicular to an extension of connector 60. One such second joint 23 is present on each end of wheel car 20. As stated above, connector 60 comprises a (complementary) first or female connection joint 63 at both of its extremities, which first joint 63 essentially consists of a recess 63a that engages with said ring-shaped element 23a, thus forming said hinged connection 22, while enabling both a swivelling motion of connector 60 about axle 23b and (limited) angular motion of the connector 60 around a central axis of said ring-shaped element 23a, cf. the double-headed arrow AM in sub-figure a) of Figure 4. Connector 60 further comprises screwed-on connector caps 65 that secure the hinged connection 22 by closing said recess 63a to the outside. Preferably, construction of the connector cap 65 may comprise a clip-on mechanism that interacts with a structure on connector 60 at reference numeral CO and enables to prevent disconnection before even fixing connector cap 65 with screw 66. Only one screw 66 is needed to fix connector 60 to wheel car 20. The second or male connecting joint 23 is preferably made from POM material, and the first or female connecting joint 63 is preferably made of PA 630, which enables smooth operation.

In the basic cars, a ball joint is used instead which cannot rotate, since it preferably devised as an integral part of the wheel car (wheel car body).

Although only one wheel car 20 and only one connector 60 are shown in Figures 4 and 5, the skilled person easily understands that one connector 60 can serve to connect two wheel cars 20, that another connector 60 can serve to attach a third wheel car 20 to the first two wheel cars 20 and so forth until a closed loop or transport chain has been achieved.

It should be noted that connector 60 is substantially longer than wheel car 20 in a direction in which the respective teeth 24, 64 succeed one another. In this way, only a reduced number of wheel cars 20 are required to close the loop. In Figures 4 and 5, the number of teeth 24 on wheel car 20 is only 3 (three), while connector 60 has 14 (fourteen) teeth 64.

Figure 5 and its sub-figures a) to f) show essentially the same "HD" wheel car 20 and connector 60 as Figure 4, with the exception of an additional cover plate 67 that is removably attached to an upper side of the connector 60, preferably by clamping underneath the end caps 65, as can best be seen from sub-figures d) and f) of Figure 5. Cover plate 67 extends laterally on both sides over a width W of the actual connector 60. Said width W is only denoted in sub-figure c) of Figure 4 and is substantially smaller than a width of the wheel cars 20. It should be noted that cover plate 67 does not obstruct access to said recesses 63a.

The cover plate 67 is intended to close up the open space between the wheel cars 20, which space is created by the long connectors 60. Cover plate 67 effectively reduces the noise and increases the overall safety of the system. (In the case of said connectors 60, the cover plate 67 can be mounted without unfastening the car chain, since the cover plate 67 is preferably flexible enough to be easily bent and pressed into the correct position.

As shown in sub-figure g) of Figure 5, the wheel cars 20 - in said alternative basic version thereof - may comprise wheels 28 (and/or 26) having tires 28a that are directly moulded onto respective bushings 28b, preferably tires 28a made from thermoplastic polyurethane, TPU, or similar material (as already mentioned earlier). With TPU tires 28a of a given wheel being over-moulded onto the bushing 28b, it is virtually impossible for them to peel off during normal operation.

Turning now to Figure 6 and its sub-figures a) through e), it should be noted that according to a highly preferred embodiment of the invention bumper cross 50 and carrier 30, respectively, as described earlier with respect to Figure 3, is/are attached to a front side of the wheel cars 20 via said base plate 55 by using a male connector 56 that is screwed to the wheel car body. Side bumpers 52 are attached above the hinged connection to the connector cap 65 (cf. above) with use of single screw 66b. It should be noted, however, that said base plate 55 need not be present in all embodiments of the invention.

However, the present invention is explicitly meant to also encompass embodiments in which said bumper cross 50 and carrier 30 are attached to an intermediate support structure (not shown) that could be connected in-line between at least one of the wheel cars and/or at least one of the connectors 60. Said intermediate support structure therefore constitutes an optional feature of the present invention.

In Figure 6, sub-figure a) is a top plan view of three wheel cars 20, one of which is not visible and supports carrier 30 and (part of) bumper cross 50. There further are a plurality of connectors 60, each of which connectors 60 connects a wheel car 20 to an adjacent wheel car 20. There is one further connector 60 (on the right-hand side) that could be used for connection to another wheel car (not shown). All of the connectors 60 are fitted with cover plates 67, as has been described before.

Sub-figure b) of Figure 6 shows the same arrangement, but without carriage 30 and basket 32.

Sub-figure c) of Figure 6 is a sectional view along line B-B in sub-figure b). In sub-figure c), the aforementioned electric drive system with motor 80 and (direct) drive sprocket 81 is depicted schematically, which drive sprocket 81 engages with teeth 24, 64 incorporated into the bottom of the wheel cars 20 and the connectors 60 for moving the transport chain.

As can further be gathered from sub-figure c) of Figure 6, said base plate support structure mentioned earlier comprises at least one additional support wheel or roller 58 for rolling on said flat support rails 10a of track 10, cf. Figure 1 and detail D in sub-figure e) of Figure 6. An axle 57 of said support wheel 58 is oriented parallel to the axes of car wheels 28.

It will be appreciated from sub-figures b), c) and e) of Figure 6 that the additional roller or support wheel 58 is offset sideways with respect to the teeth 24, 64 and sprocket 81 so that there is no interference between these elements when the wheel cars 20 and the connectors 60are moved along the track (or pathway).

Support wheel 58 may comprise a tire 58a that is placed onto two respective bushings (not shown), preferably a tire 58a made from thermoplastic polyurethane, TPU, or similar material.

As can be gathered from sub-figure d) of Figure 6, one common screw 66b can be used to fix both the connector cap 65 (cf. Figures 4 a), 5 a)) and the side bumper 52 to connector 60. Preferably, the male connector 56is attached to a wheel car or wheel car body (not visible) by means of additional screws 66a. The same kind of screw can be used as screw 66b in Fig-ure 6d) and as screw 66a in Figure 6e). In case there is no side bumper 52, different screws are being used as shown in Figures 5e) and f) (reference number 66). The cover plate 67 does not require any screws for mounting, it can have a wedge shape or the like that is held geometrically under the connector cap 65.

In other words: in the prior art, the side bumpers 52 as used in the carrier system are mounted onto the wheel cars 20. In an embodiment of the present invention, side bumpers 52 are mounted onto connector 60 and connector cap 65

In the foregoing, the invention has been described in exemplary fashion by means of an embodiment wherein the bumper cross 50 and carrier 30 are attached to connectors 60 and/or to a wheel car 20. Alternatively, they could be fixed - at least in part - to an intermediate support structure (not shown in the drawings).

In any case, the (relatively long) connectors 60 effectively lower down the number of wheel cars 20 and therefore also the number of wheels 26, 28 driving inside the extruded aluminium rail 10 (cf. Figure 2), which reduces noise produced by the system and thus also reduces wear.

During operation, the carrier 30, which hangs on male connector 56, is supported by bumpers 51, 52, insofar as they are present. If carrier 30 is moving upwards or downwards, it is supported by side bumper 52. If it is going sideways, it is supported by cross bumper 51, cf. Figure 4 a). There is the difference in purely vertical systems which, due to the lack of horizontally oriented tracks, do not require parts 51 and 55, as stated previously.

The flat support rails 10a mentioned earlier in connection with Figure 1 have been described in detail in EP 3 533 733 B1, and the corresponding description is herewith incorporated by reference.

The conveyor system described herein may be designed as an "on-demand" system. In other words, the system only works when there is product that needs to be carried from the load point to the offload point. To operate the system, the crew person simply places a wrapped food product onto the slide 41 of the loading point 40, cf. Figure 1. The system is started by pressing a "Load" button or the like, and the carrier 30 with the food product is moved rapidly along the track 10 at up to 0.7 m/s.

Instead of the carriers 30 described above, a so-called Bag&Clip system could be used, wherein food is transported in bags that are attached to wheel cars by means of clips or hooks. Typically, the speed of such Bag&Clip systems does not exceed 1,1 m/s.

When the carrier 30 arrives at the offload point, the product will be taken from the carrier. The system can also be equipped with a control system with logic for automatically stopping the system after the food item has been unloaded. A variable speed control system also provides smooth acceleration and deceleration of the system to avoid jerky movements.

## Claims

1. A conveyor system for the transport of packaged food products, comprising:
a curved, preferably closed-loop pathway defined by a profiled track (10);
a plurality of wheel cars (20) having wheels (26, 28) that are movably contained within and guided by said profiled track (10); and
at least one removable connector (60), preferably a plurality of removable connectors (60), wherein at least one pair of wheel cars (20) are separated along said pathway by means of said removable connector (60) that is positioned between the two wheel cars (20) in said pair of wheel cars (20);
said wheel cars (20) and said connectors (60), respectively, form part of a continuous transport chain extending along said pathway;
said transport chain having an attachment side facing towards an open side of said profiled track (10), and said track (10) being arranged such that said open side faces into a substantially horizontal direction such that said attachment side is oriented substantially vertically during motion of said wheel cars (20) along the pathway;
said conveyor system further comprising at least one carrier (30) with a carrier rack (32) adapted to support a food product to be transported, said carrier (30) being pivotably mounted to the attachment side of said transport chain, to maintain the carrier rack (32) in a horizontal position as the carrier (30) travels along the pathway.

2. The conveyor system of claim 1, wherein said wheel cars (20) and said connectors (60), respectively, have an attachment side that constitutes part of the attachment side of the transport chain; and wherein said carrier (30) is mounted on a wheel car (20) or on a connector (60) on said respective attachment side thereof.

3. The conveyor system of claim 1 or 2, wherein the connectors (60) are devised as rod-shaped, elongated elements, each of which has a respective first connection joint (63), preferably a female connection joint, at both extremities for detachable hinged connection to a wheel car (20); wherein the wheel cars (20) have a respective second connection joint (23), preferably a male connection joint, at opposite ends for detachable hinged connection (22) to a connector (60).

4. The conveyor system of claim 3, wherein said hinged connection (22) between a given wheel car (20) and a given connector (60) comprises an engagement of the first connection joint (63) and the second connection joint (23).

5. The conveyor system of claim 3 or 4, wherein said second connection joint (23) is made from polyoxymethylene, POM, or similar material and the first connection joint (63) is made from polyamide, PA, preferably PA6 or PA66, or similar material.

6. The conveyor system of any one of claims 3 to 5, wherein at least one connector cap (65) is detachably fixed to one of said given connector (60) and said given wheel car (20), preferably two connector caps (65) per connector (60), which connector cap (65) covers said hinged connection (22).

7. The conveyor system of any one of claims 1 through 6, wherein the wheel cars (20) and the connectors (60) comprise gear teeth (24; 64) on a respective underside thereof for engaging a drive mechanism, which underside faces away from said open side, wherein preferably a number of teeth (64) is bigger for said connectors (60) than for said wheel cars (20), for example 14 for said connectors (60) and 3 for said wheel cars (20).

8. The conveyor system of any one of claims 1 to 7, wherein a base plate (55) having a front side and a back side is installed between the carrier (30) and, with reference to claim 2, the corresponding wheel car (20) or connector (60), said base plate (55) carrying at its front side a hanging pivot (53) from which said carrier (30) is suspended.

9. The conveyor system of claim 8, wherein said base plate (55) carries at its front side at least one lateral bumper (52) against which said carrier (30) rests when travelling along said horizontal section of said track (10) to suppress swinging movements of said carrier (30).

10. The conveyor system of claim 7 or 8, wherein said base plate (55) comprises a support structure that has at least one additional support wheel (58) for rolling on flat support rails 10a attached to the track (10).

11. The conveyor system of claim 9 with reference to claim 6, wherein said bumper (52) is removably attached together with said connector cap (65), preferably by means of one common fixing element, for example a screw (66b).

12. The conveyor system of any one of claims 1 to 11, wherein the wheel cars (20) and/or, with reference to claim 10, the support structure comprises wheels (26, 28, 58) having tires (28a, 58a) that are directly moulded onto respective bushings, preferably tires made from thermoplastic polyurethane, TPU, or similar material, or wheels with glued-on tires or tires mounted geometrically using two bearings.

13. The conveyor system of any one of claims 1 to 12, wherein said wheel cars (20) are made from polyoxymethylene, POM, , and/or wherein said connectors (60) are made from a fibre-reinforced plastics material, preferably fibreglass, preferably from fibre-reinforced polyamide, in particular PA6 containing 30% of glass fibre, or similar material.

14. The conveyor system of any one of claims 1 to 13, wherein a cover plate (67) is detachably fixed on at least one connector (60), preferably on each connector (60), which cover plate essentially covers a whole length of the connector (60), with reference to claim 3 with an exception of said first connection joints (63), and extends laterally beyond a width (W) of the connector (60).

15. The conveyor system of any one of claims 1 to 14, with reference to claim 6, wherein said cover plate (67) is fixed to the connector (60) by means of said connector cap (65), or with reference to claim 11, wherein said cover plate (67) is fixed to the connector (60) together with said connector cap (65) and said bumper (52).
